# EUROPEAN PATENT SPECIFICATION

(11) **EP 0 712 236 B1**
(45) Date of publication and mention of the grant of the patent: **06.05.1999**
(21) Application number: 95115944.1
(22) Date of filing: 10.10.1995
(51) Int. Cl.: H04N 3/15, H04N 5/235

(54) **Timing signal generator for a solid state imaging device having an electronic shutter**
Taktgenerator für eine Festkörperbildaufnahmevorrichtung mit einem elektronischen Verschluss
Générateur d'impulsions pour un dispositif d'imagerie à l'état solide ayant un obturateur électronique

(30) Priority: 11.10.1994 JP 245153/94
(43) Date of publication of application: 15.05.1996
(73) Proprietor: SONY CORPORATION, Tokyo (JP)
(72) Inventor: Mori, Hiroshi, c/o Sony Corporation, Tokyo (JP)
(74) Representative: Müller, Frithjof E., Dipl.-Ing.

(56) References cited:
- EP-A- 0 583 143
- GB-A- 2 262 678
- US-A- 4 484 223
- US-A- 4 701 626
- US-A- 5 040 070

## Description

### BACKGROUND OF THE INVENTION

### Field of the Invention

The present invention relates to a timing signal generator for driving a solid state imaging device having an electronic shutter control function (electronic exposure control function) and, more specifically, to a timing signal generator for generating shutter control pulses on the basis of the level of the output signal of a solid state imaging device.

### Description of the Related Art

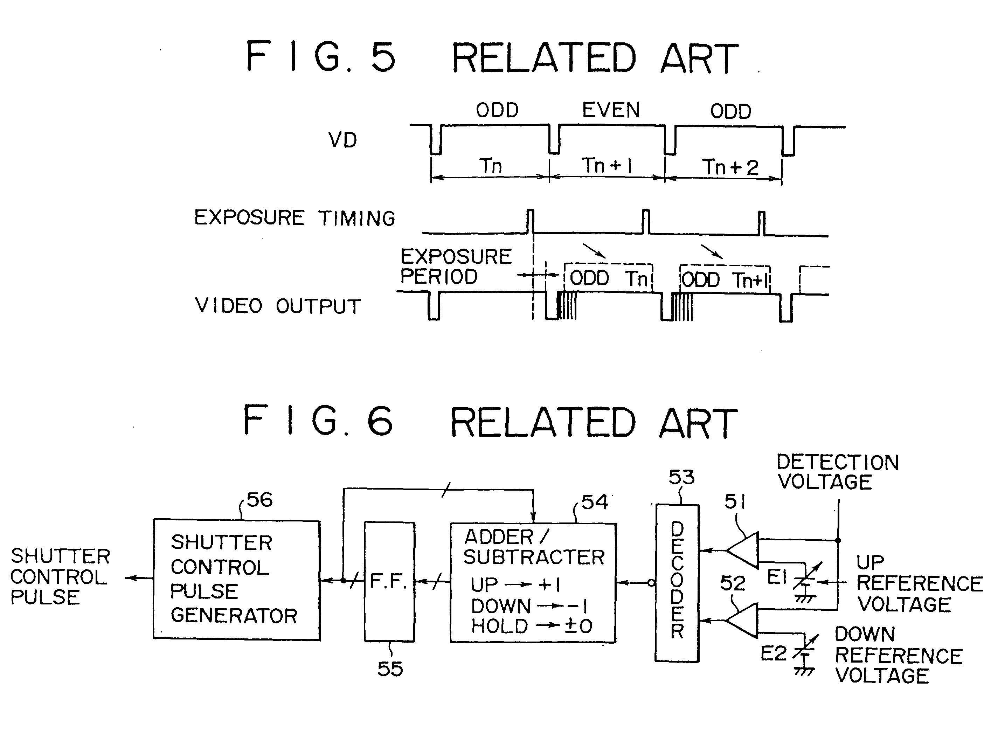

Some solid state imaging device has an electronic shutter control function (electronic exposure control function) to control signal charge storing time (exposure time) needed for the sensing elements to store signal charges. Basically, this solid state imaging device stores a charge only for a desired period preceding the time when a signal charge (light charge) is read out, and drains signal charges provided before the desired period into a separate place (for example, the substrate). Fig. 5 is a time chart showing signals dealt with by the solid state imaging device. A vertical transfer register reads signal charges in synchronism with a vertical synchronizing signal VD. The vertical transfer register provides a drain-off pulse at a time (exposure time) preceding the read time to drain signal charges stored in the sensing elements before the read time. The period between the exposure time and the read time is an exposure period (exposure time).

The solid state imaging device has, as one of its functions, what they call an electronic iris system that controls exposure by using the electronic shutter control function of a CCD solid state imaging device. The electronic iris system changes the shutter speed (exposure time) according to the brightness of the object; the electronic iris system increases the shutter speed when the object is bright and reduces the same when the object is dark. Shutter speed is controlled by controlling the timing of a pulse to be applied to the substrate to drain signal charges stored in the sensing elements to, for example, the substrate (hereinafter referred to as "shutter pulse").

Fig. 6 shows a conventional timing signal generator for generating a shutter control pulse. Basically, this timing signal generator generates a shutter control pulse at time determined on the basis of a detection voltage obtained by integrating the output signal of a CCD solid state imaging device with respect to time. As shown in Fig. 6, the detection voltage determined on the basis of the output signal of the CCD solid state imaging device is applied to comparators 51 and 52 to which reference voltages E1 and E2 (E1 > E2) are applied, respectively. The output signals of the comparators 51 and 52 are given to a decoder 53. The decoder 53 gives UP data specifying increasing the shutter speed, DOWN data specifying decreasing the shutter speed or HOLD data specifying holding the shutter speed, according to the output signals of the comparators 51 and 52 to an adder/subtracter 54. The adder/subtracter 54 executes an operation according to the data given thereto by the decoder 53 to increase the shutter speed data by one step, to decrease the same by one step or to hold the shutter speed. The shutter speed data is given to a flip-flop (F.F.) 55. A shutter control pulse generator 56 generates a shutter control pulse at time corresponding to the shutter speed data held by the flip-flop 55.

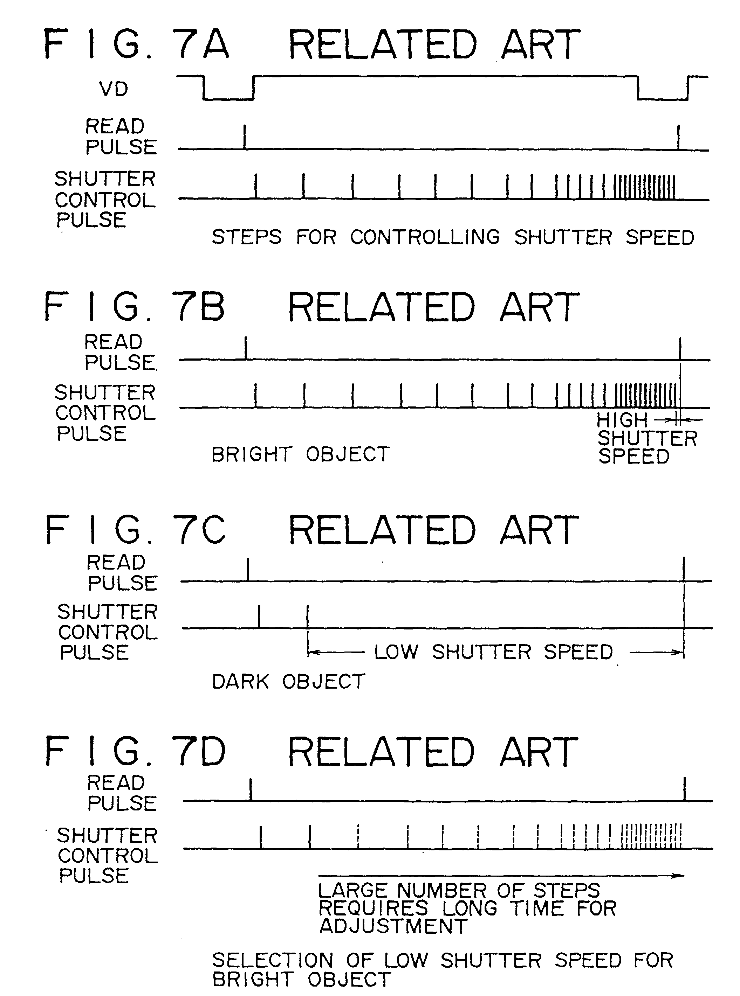

The operation of this conventional timing signal generator will be described hereinafter. The detection voltage obtained by integrating the output signal of the CCD solid state imaging device with respect to time is compared with the reference voltages E1 and E2 by the two comparators 51 and 52. The decoder 53 gives data to hold the shutter speed if the detection voltage is between the reference voltages E1 and E2, data to increase the shutter speed if the detection voltage is higher than the higher reference voltage E1 or data to decrease the shutter speed if the detection voltage is lower than the lower reference voltage E2 to the adder/subtracter 54. The adder/subtracter 54 executes an operation for (current shutter speed) ±0, (current shutter speed) +1 or (current shutter speed) -1 according to the data given thereto by the decoder 53. New shutter speed data thus provided by the adder/subtracter 54 is latched by the flip-flop 55. The shutter control pulse generator 56 generates a shutter control pulse corresponding to the new shutter speed data latched by the flip-flop 55 to control the exposure time of the CCD solid state imaging device. Generally, this series of operations is repeated periodically until the detection voltage is adjusted to a voltage between the reference voltages E1 and E2. A shutter speed selected according to the shutter speed data from a plurality of shutter speeds as shown in Fig. 7A. When the object is bright, a high shutter speed, such as 1/100,000 sec, is selected as shown in Fig. 7B. When the object is dark, a low shutter speed, such as 1/60 sec, is selected as shown in Fig. 7C.

This conventional timing signal generator of the foregoing configuration is not provided with any circuit for determining a shutter speed when the timing signal generator is connected to the power supply. Therefore, it is possible that shutter speed data specifying a low shutter speed as shown in Fig. 7D is latched by the flip-flop 55 even when the timing signal generator is connected to the power supply in, for example, a bright environment, which requires a long time for iris adjustment. The same problem arises when a high shutter speed data is latched by the flip-flop even though the timing signal generator is connected to the power supply in a dark environment. Suppose that the range of shutter speed is, for example, from 1/60 sec, i.e., the lowest shutter speed, to 1/100,000 sec, i.e., the highest shutter speed, the lowest shutter speed data is loaded upon the connection of the solid state imaging device to the power supply, and the highest shutter speed data is loaded eventually. Then, a comparatively long time elapses before the iris operation converges, which is the same for an occasion when the lowest shutter speed data is loaded eventually. Such a problem arises also in changing, for example, a fixed shutter operation mode to an electronic iris operation mode.

Prior art document US-A-44 84 223 discloses an image sensor wherein an output level of a comparator is observed, and dependent on the number of counted auxiliary count pulses an up-down counter is reset, thus resetting an accumulating time to a level which is determined by the number of the pulses.

Further, prior art document EP-A-0 583 143 discloses an electronic shutter for a video camera wherein an adder/subtracter is followed by a latch circuit.

### SUMMARY OF THE INVENTION

It is an object of the present invention to provide a timing signal generator that curtails the time needed for the convergence of an electronic iris when the timing signal generator is connected to the power supply or when the operating mode is changed.

To solve this object the present invention provides a timing signal generator as defined in claim 1.

Preferred embodiments of the invention are described in the subclaims.

A timing signal generator for generating a shutter control pulse on the basis of the level of the output signal of a solid state imaging device having an electronic shutter function to drive the solid state imaging device, comprises: a shutter speed data setting means for setting a shutter speed on the basis of the level of the output signal of the solid state imaging device: a shutter control pulse generating means for generating a shutter control pulse corresponding to the shutter speed data set by the shutter speed setting means; and an initial data setting means for setting initial shutter speed data when the timing signal generator is connected to a power supply or when the operating mode is changed.

When the timing signal generator is in steady-state operation, the detection voltage obtained by integrating the output signal of the solid state imaging device with respect to time is compared with the predetermined reference voltages, and the shutter speed is increased or decreased on the basis of the result of comparison. Thus, the time of the shutter control pulse is controlled so that the shutter speed is increased when the detection voltage is higher than the reference voltages or the shutter speed is decreased when the detection voltage is lower than the reference voltages to control the exposure time of the solid state imaging device. Predetermined initial data representing an initial shutter speed is loaded when the timing signal generator is connected to the power supply or the operating mode is changed to specify a shutter speed from which the electronic iris operation is started.

### BRIEF DESCRIPTION OF THE DRAWINGS

The above and other objects, features and advantages of the present invention will become more apparent from the following description taken in connection with the accompanying drawings, in which:
Fig. 1 is a block diagram of a timing signal generator in a preferred embodiment according to the present invention and an interline transfer type CCD solid state imaging device combined with the timing signal generator;
Fig. 2 is sectional view of one of the pixels of the CCD solid state imaging device of Fig. 1;
Fig. 3 is a time chart of assistance in explaining the operation of a modification of the timing signal generator of Fig. 1;
Fig. 4 is a block diagram of a TV camera in a preferred embodiment according to the present invention;
Fig. 5 is a time chart of assistance in explaining the operation of an electronic shutter;
Fig. 6 is a block diagram of a conventional timing signal generator; and
Figs. 7A, 7B, 7C and 7D are time chart of assistance in explaining a method of selecting a shutter speed.

### DETAILED DESCRIPTION OF THE PREFERRED EMBODIMENT

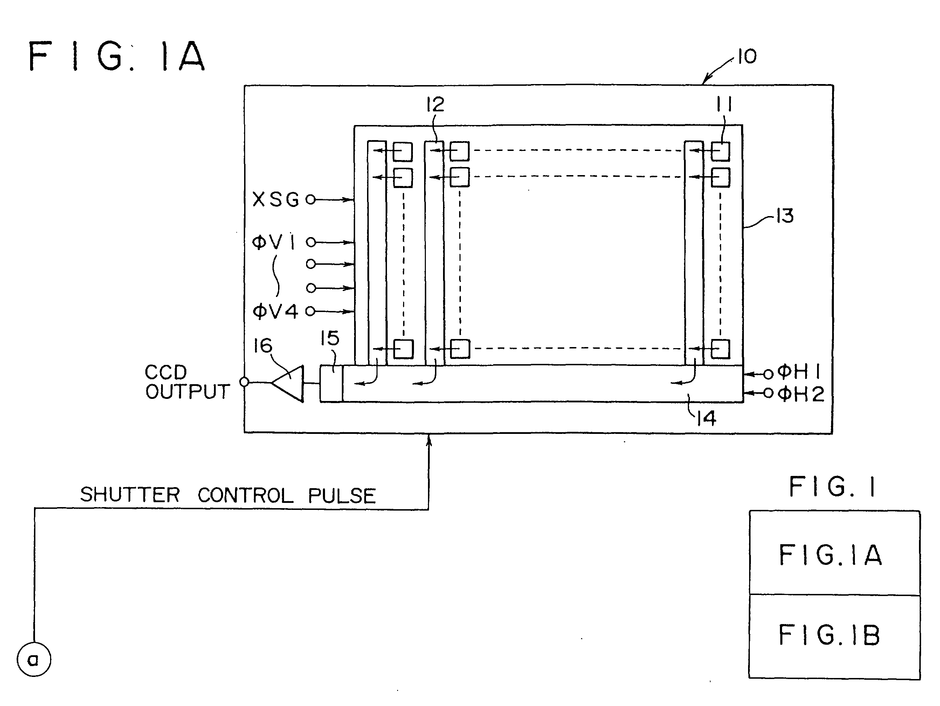

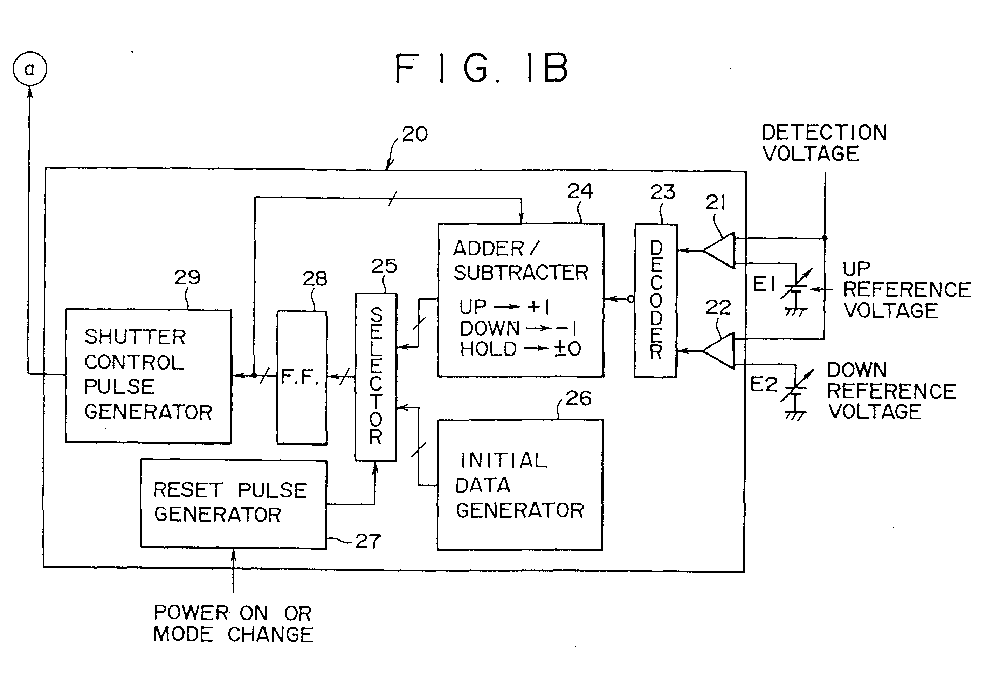

Referring to Fig. 1, showing a timing signal generator 20 in a preferred embodiment according to the present invention and an interline transfer type CCD solid state imaging device 10 combined with the timing signal generator 10, a plurality of sensing elements (photoelectric transducers) 11, which store a signal charge proportional to the quantity of incident light, are arranged in vertical rows and horizontal rows to form a matrix, and a plurality of vertical transfer registers 12 are connected to the vertical rows of the sensing elements 11, respectively, to transfer vertically signal charges read from the sensing elements 11 to form an imaging area 13. In this imaging area 13, each sensing element 11 is, for example, a pn-junction photodiode, and each vertical transfer register 12 comprises a CCD. When reading the signal charges stored in each sensing element 11 by the vertical transfer register 12, a read pulse XSG is applied to the read gate of the sensing element 11. Each vertical transfer register 12 is driven for transfer operation by, for example, vertical transfer clock signals φV1, φV2, φV3 and φV4 of four phases. Portions of the signal charges read by the vertical transfer register 12 each corresponding to one scanning line are transferred sequentially in a vertical direction in a portion of a horizontal blanking interval. A horizontal transfer register 14 comprising a CCD is disposed on the lower side, as viewed in Fig. 1, of the imaging area 13. Portions of the signal charges corresponding to one scanning line are transferred sequentially from the vertical transfer registers 12 to the horizontal transfer register 14. The horizontal transfer register 14 is driven for transfer operation by two horizontal transfer clock signals φH1 and φH2 of two phases. The signal charges each for one line are transferred sequentially in a horizontal direction in a horizontal scanning interval subsequent to a horizontal blanking interval. A charge detector 15 of, for example, a floating diffusion type is disposed at one end of the horizontal transfer register 14 to convert the horizontally transferred signal charges sequentially into corresponding voltage signals. The voltage signals are amplified by an output amplifier 16 to obtain a CCD output corresponding to the quantity of incident light from the object.

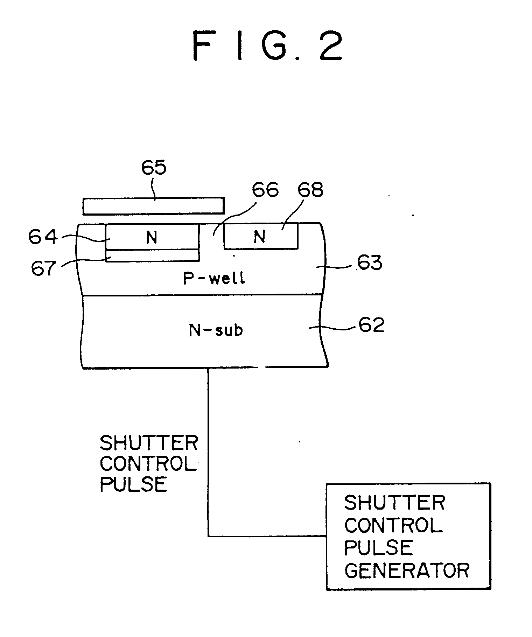

Referring to Fig. 2 showing one of the pixels of the CCD solid state imaging device 10 in a sectional view, a p-type well 63 is formed on an n-type semiconductor substrate 62, the sensing element 68 is formed on the p-type well 63, a CCD channel 64 is formed in the p-type well 63, and a read gate 66 is formed between the sensing element 68 and the CCD channel 64. A gate electrode 65 is formed over the CCD channel 64 such that the gate electrode 65 is electrically insulated from the CCD channel 64. A p-type layer 67 underlies the CCD channel 64.

The interline transfer type CCD solid state imaging device 10 thus constructed has an electronic shutter function, which applies a shutter control pulse to the substrate to drain the signal charges stored in the sensing elements 11 onto the substrate to control the signal charge storage time (exposure time) of the sensing elements 11. The substrate is biased by a fixed voltage (substrate voltage) to store signal charges in the sensing elements 11 in the normal operation, and a shutter control pulse is added to the substrate voltage to destroy the barrier of the substrate so that the signal charges stored in the sensing elements are swept off onto the substrate. The shutter control pulse is provided at time corresponding to the detection voltage provided by the timing signal generator 20 by integrating the output signal of the CCD solid state imaging device 10 with respect to time.

In the timing signal generator 20, the detection voltage produced by processing the output signal of the CCD solid state imaging device 10 is a comparison input to two comparators 21 and 22 to which reference voltages E1 and E2 (E1 > E2) are applied, respectively. The respective output signals of the comparators 21 and 22 are given to a decoder 23. The decoder 23 gives UP data specifying increasing the shutter speed, DOWN data specifying decreasing the shutter speed or HOLD data specifying holding the shutter speed, according to the output signals of the comparators 21 and 22 to an adder/subtracter 24. The adder/subtracter 24 executes an operation according to the data given thereto by the decoder 23 to increase the shutter speed data by one step, to decrease the same by one step or to hold the shutter speed. The shutter speed data is applied to one of the input terminals of a selector 25. Initial data produced by the initial data generator 26 is applied to the other input terminal of the selector 25. The initial data generator 26 enables the operator to set optional data according to the service condition of the electronic shutter. For example, if the shutter speed data is 8-bit digital data, desired data is given to the initial data generator 26 by using an 8-bit shift register. The selector 25 selects the initial data provided by the initial data generator 26 and loads a flip-flop (F.F.) 28 at the next stage with the selected initial data in response to a reset pulse given thereto by a reset pulse generator 27. A shutter control pulse generator 29 at the last stage generates a shutter control pulse corresponding to the shutter speed data latched by the flip-flop 28. The reset pulse generator 27 is, for example, a flip-flop.

The comparators 21 and 22, the decoder 23, the adder/subtracter 24, the selector 25 and the flip-flop 28 constitute a shutter speed setting means for setting shutter speed data on the basis of the detection voltage representing the level of the output signal of the CCD solid state imaging device 10. The initial data generator 26, the reset pulse generator 27, the selector 25 and the flip-flop 28 constitute an initial data setting means for setting predetermined initial data as shutter speed data when the timing signal generator 20 is connected to the power supply or when the mode is changed.

The operation of the timing signal generator 20 will be described hereinafter. The operation of the timing signal generator 20 in the steady state is the same as that of the conventional timing signal generator. The detection voltage obtained by integrating the output signal of the CCD solid state imaging device 10 with respect to time is compared with the reference voltages E1 and E2 by the two comparators 21 and 22. The decoder 23 receives the output signals of the comparators 21 and 22 and gives data to hold the shutter speed if the detection voltage is between the reference voltages E1 and E2, data to increase the shutter speed if the detection voltage is higher than the higher reference voltage E1 or data to decrease the shutter speed if the detection voltage is lower than the lower reference voltage E2 to the adder/subtracter 24. The adder/subtracter 24 executes an operation for (current shutter speed) ±0, (current shutter speed) +1 or (current shutter speed) -1 according to the data given thereto by the decoder 23. New shutter speed data thus provided by the adder/subtracter 24 is given through the selector 25 to and latched by the flip-flop 28. The shutter control pulse generator 29 generates a shutter control pulse corresponding to the new shutter speed data to control the exposure time of the CCD solid state imaging device 10. This series of operations is repeated periodically until the detection voltage is adjusted to a voltage between the reference voltages E1 and E2.

The operation of the timing signal generator 20 when the timing signal generator 20 is connected to the power supply will be described hereinafter. Upon the connection of the timing signal generator 20 to the power supply, the reset pulse generator 17 generates a reset pulse that remains LOW for a fixed period. Then, the selector 25 selects initial data among those provided by the initial data generator 26 and loads the flip-flop 28 with the selected initial data. The initial data specifies a shutter speed at which the electronic iris operation is started. After the fixed time has elapsed, the reset pulse goes HIGH. Then, the selector 25 selects the data provided by the adder/subtracter 24 and the normal electronic iris operation is started.

As mentioned above, desired initial data meeting service condition is set in the initial data generator 26, the selector 25 selects the set initial data and gives the same to the flip-flop 28 upon the connection of the timing signal generator 20 to the power supply to specify a shutter speed at the connection of the timing signal generator 20 to the power supply. Thus, an optional shutter speed can be set for the initial stage of the electronic iris operation. Since the electronic iris operation can be thus started from a high shutter speed or a low shutter speed depending on the service condition, the time needed for the convergence of the electronic iris after the connection of the timing signal generator to the power supply can be reduced. Similarly, the time needed for the convergence of the electronic iris when the operating mode is changed from the fixed shutter operation mode to the electronic iris operation mode can be reduced.

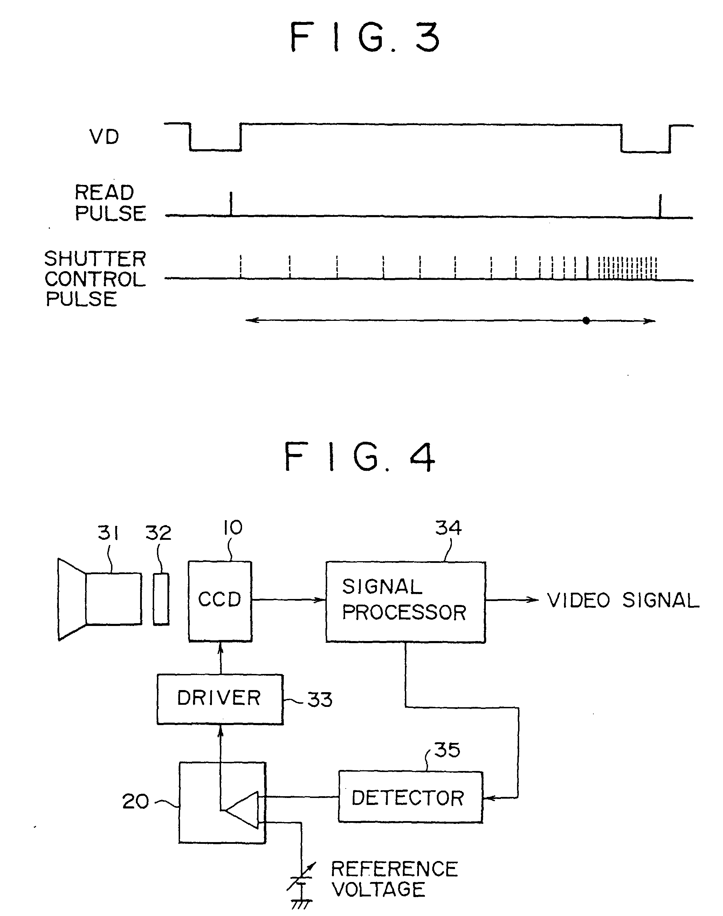

Although the embodiment has been described on an assumption that the initial data can be optionally specified taking into consideration the service condition, fixed initial data representing a shutter speed substantially at the middle between the highest shutter speed and the lowest shutter speed as shown in Fig. 3 may be set in the initial data generator 26. For example, since the shutter speed data can be divided into 256 steps when the shutter speed data is 8-bit digital data, a shutter speed at the 128th step is set as initial data in the initial data generator 26. When such initial data is set, the initial data is given to the flip-flop 28 when the timing signal generator 20 is connected to the power supply or when the operating mode is changed, the number of steps of the convergence of the electronic iris operation toward the highest shutter speed and that of the electronic iris operation toward the lowest shutter speed are equal to each other. Thus, the electronic iris operation converge in a reduced time.

Referring to Fig. 4 showing a TV camera equipped with the foregoing CCD solid state imaging device 10 in accordance with the present invention, light from an object travels through a lens 31 and an optical filter 32 and falls on the imaging area 13 (Fig. 1) of the CCD solid state imaging device 10. The CCD solid state imaging device 10 is driven by a driving circuit 33 which in turn is controlled by timing signals including the output shutter control pulse of the timing signal generator 20. The magnitude of the output signal of the CCD solid state imaging device 10 is proportional to the intensity of the light traveled through the lens 31 and the optical filter 32 and fallen on the imaging area 13. A signal processor 34 processes the output signal of the CCD solid state imaging device for by an operation, such as a correlation double sampling (CDS) operation, provides a video signal and gives an output signal to a detector 35. The detector 35 detects the magnitude of the output signal of the CCD solid state imaging device 10 given thereto through the signal processor 34 and integrates the output signal of the CCD solid state imaging device 10 with respect to time to give a detection voltage to the timing signal generator 20. The timing signal generator 20 executes the aforesaid operations; the timing signal generator 20 compares the detection voltage with the reference voltages, controls the timing of the shutter control pulse to increase the electronic shutter speed when the detection voltage is higher than the higher reference voltage or to decrease the electronic shutter speed when the detection voltage is lower than the lower reference voltage to control the exposure time of the CCD solid state imaging device 10. Thus, a fixed CCD output signal specified by the reference voltages can be automatically provided through the foregoing series of operations.

Although the invention has been described in its preferred form with a certain degree of particularity, obviously many changes and variations are possible therein. It is therefore to be understood that the present invention may be practiced otherwise than as specifically described herein without departing from the scope as defined in the claims.

## Claims

1. A timing signal generator for generating a shutter speed control pulse for controlling the exposure time of a solid state imaging device, said timing signal generator comprising:
- a first comparator (21) to which a higher reference voltage and a detection voltage representing the level of the output signal of the solid state imaging device are applied;
- a second comparator (22) to which a lower reference voltage and said detection voltage are applied;
- a decoder (23) that receives the respective output signals of said first and said second comparators (21, 22) and provides UP data specifying increasing the shutter speed, DOWN data specifying decreasing the shutter speed or HOLD data specifying holding the shutter speed, according to the respective output signals of said first and said second comparators (21, 22);
- an adder/subtracter (24) that executes an operation according to the data given thereto by said decoder (23) to increase the shutter speed data, to decrease the same or to hold the same;
- a reset pulse generator (27) for generating a reset pulse when the timing signal generator is connected to a power supply, or when the operating mode is changed,
- an initial data generator (26) that generates initial shutter speed data representing an initial shutter speed, and
- a shutter control pulse generator (29) that generates a shutter control pulse corresponding to the shutter speed data; wherein:
- said first and said second comparators (21, 22), said decoder (23) and said adder/subtracter (24) constitute a shutter speed setting means for setting shutter speed data on the basis of the detection voltage representing the level of the output signal of the solid state imaging device; and
- said initial data generator (26) and said reset pulse generator (27) constitute an initial data setting means for setting predetermined initial data as shutter speed data when the timing signal generator is connected to the power supply or when the operating mode is changed,
**characterized in that:**
- a selector (25) included in said shutter speed setting means and said initial data setting means and connected to a latch circuit (28) selects the shutter speed data determined by the adder/subtracter (24) during the normal operation of the solid state imaging device or the initial shutter speed data generated by said initial data generator (26) when a reset pulse generated by the reset pulse generator (27) is given thereto,
- said reset pulse generator (27) gives the reset pulse to said selector (25) whenever the timing signal generator is connected to said power supply or whenever the operating mode is changed;
- said initial data generator (26) gives the initial shutter speed data to said selector (25), and
- the output of said latch circuit (28) is connected to said shutter control pulse generator (29) and to said adder/substracter (24).

2. A method of controlling the exposure time of a solid state imaging device by using the timing signal generator stated in claim 1, said method comprising steps of:
integrating the output signal of the solid state imaging device to obtain a detection voltage representing the level of the output signal of the solid state imaging device;
applying the detection voltage and the higher reference voltage to the first comparator (21) and applying the detection voltage and the lower reference voltage to the second comparator (22);
decoding the respective output signals of the first and the second comparators (21, 22) by the decoder (23);
giving UP data specifying increasing the current shutter speed, DOWN data specifying decreasing the current shutter speed or HOLD data specifying holding the current shutter speed, according to the respective output signals of the first and the second comparators (21, 22) to the adder/subtracter (24);
increasing the current shutter speed, decreasing the same or holding the same by the adder/subtracter (24);
generating a reset pulse by the reset pulse generator (27) and giving the reset pulse to the selector (25) when the timing signal generator is connected to a power supply or when the operating mode is changed to make the selector (25) select the initial shutter speed data generated by the initial data generator (26) and latch said initial shutter speed data into the latch circuit (28);
generating a shutter control pulse corresponding to the shutter speed data by the shutter control pulse generator (29); and
giving the shutter control pulse to the solid state imaging device.

3. A timing signal generator according to claim 1, wherein the initial shutter speed to be set in the initial data generator (26) is optional.

4. A timing signal generator according to claim 1, wherein the initial shutter speed corresponds to the middle point between the highest shutter speed and the lowest shutter speed.

5. A method of contrqlling the exposure time of a solid state imaging device, according to claim 2, wherein an optional initial shutter speed specifying the initial shutter speed data is given to the initial data generator (26).

6. A method of controlling the exposure time of a solid state imaging device, according to claim 5, wherein the optional shutter speed is the middle point between the highest shutter speed and the lowest shutter speed.

7. A video camera comprising:
a solid state imaging device (10) comprising:
a plurality of sensing elements (11) for storing a signal charge proportional to the quantity of incident light,
an output amplifier (16) to provide an output signal corresponding to the quantity of incident light from the object; and
the timing signal generator stated in claim 1.

## Patentansprüche

1. Taktsignalgenerator zum Erzeugen eines Verschlußgeschwindigkeitssteuerimpulses zum Steuern der Belichtungszeit einer Festkörper-Abbildungsvorrichtung, wobei der Taktsignalgenerator aufweist:
- einen ersten Vergleicher (21), zu dem eine höhere Bezugsspannung und eine Detektionsspannung, die den Pegel des Ausgangssignales der Festkörper-Abbildungsvorrichtung darstellt, gespeist sind,
- einen zweiten Vergleicher (22), zu dem eine niedrigere Bezugsspannung und die Detektionsspannung gespeist sind,
- einen Decodierer (23), der die jeweiligen Ausgangssignale des ersten und des zweiten Vergleichers (21, 22) empfängt und AUFWÄRTS-Daten, die eine Zunahme der Verschlußgeschwindigkeit angeben, ABWÄRTS-Daten, die eine Abnahme der Verschlußgeschwindigkeit angeben, oder HALT-Daten, die ein Halten der Verschlußgeschwindigkeit angeben, gemäß den jeweiligen Ausgangssignalen der ersten und zweiten Vergleicher (21, 22) liefert,
- einen Addierer/Subtrahierer (24), der eine Operation gemäß den durch den Decodierer (23) gegebenen Daten ausführt, um die Verschlußgeschwindigkeitsdaten zu erhöhen, diese zu vermindern oder diese zu halten,
- einen Rücksetzimpulsgenerator (27) zum Erzeugen eines Rücksetzimpulses, wenn der Taktsignalgenerator mit einer Strom- bzw. Spannungsversorgung verbunden ist, oder wenn der Betriebsmodus verändert wird,
- einen Anfangsdatengenerator (26), der Anfangsverschlußgeschwindigkeitsdaten erzeugt, die eine Anfangsverschlußgeschwindigkeit darstellen, und
- einen Verschlußsteuerimpulsgenerator (29), der einen Verschlußsteuerimpuls entsprechend den Verschlußgeschwindigkeitsdaten erzeugt, wobei:
- der erste und der zweite Vergleicher (21, 22), der Decodierer (23) und der Addierer/Subtrahierer (24) eine Verschlußgeschwindigkeitseinstelleinrichtung zum Einstellen der Verschlußgeschwindigkeitsdaten auf der Grundlage der Detektionsspannung bilden, die den Pegel des Ausgangssignales der Festkörper-Abbildungsvorrichtung darstellt, und
- der Anfangsdatengenerator (26) und der Rücksetzimpulsgenerator (27) eine Anfangsdateneinstellungseinrichtung bilden, um vorbestimmte Anfangsdaten als Verschlußgeschwindigkeitsdaten einzustellen, wenn der Taktsignalgenerator mit der Strom- bzw. Spannungsversorgung verbunden ist oder wenn der Betriebsmodus verändert wird,
**dadurch gekennzeichnet, daß**
- ein Wähler (25), der in der Verschlußgeschwindigkeitseinstelleinrichtung und der Anfangsdateneinstelleinrichtung enthalten und mit einer Verriegelungsschaltung (28) verbunden ist, die durch den Addierer/Subtrahierer (24) bestimmten Verschlußgeschwindigkeitsdaten während des normalen Betriebes der Festkörper-Abbildungsvorrichtung oder die durch den Anfangsdatengenerator (26) erzeugten Anfangsverschlußgeschwindigkeitsdaten, wenn ein durch den Rücksetzimpulsgenerator (27) erzeugter Rücksetzimpuls dort vorliegt, wählt,
- der Rücksetzimpulsgenerator (27) den Rücksetzimpuls zu dem Wähler (25) liefert, wann immer der Taktsignalgenerator mit der Strom- bzw. Spannungsversorgung verbunden ist oder wann immer der Betriebsmodus verändert wird,
- der Anfangsdatengenerator (26) die Anfangsverschlußgeschwindigkeitsdaten zu dem Wähler (25) liefert, und
- der Ausgang der Verriegelungsschaltung (28) mit dem Verschlußsteuerimpulsgenerator (29) und dem Addierer/Subtrahierer (24) verbunden ist.

2. Verfahren zum Steuern der Belichtungszeit einer Festkörper-Abbildungsvorrichtung mittels des Taktsignalgenerators nach Anspruch 1, wobei das Verfahren die folgenden Schritte aufweist:
Integrieren des Ausgangssignales der Festkörper-Abbildungsvorrichtung, um eine Detektionsspannung zu gewinnen, die den Pegel des Ausgangssignales der Festkörper-Abbildungsvorrichtung darstellt,
Anlegen der Detektionsspannung und der höheren Bezugsspannung an den ersten Vergleicher (21) und Anlegen der Detektionsspannung und der niedrigeren Bezugsspannung an den zweiten Vergleicher (22),
Decodieren der jeweiligen Ausgangssignale der ersten und zweiten Vergleicher (21, 22) durch den Decodierer (23),
Liefern von AUFWÄRTS-Daten, die eine Zunahme der gegenwärtigen Verschlußgeschwindigkeit angeben, ABWÄRTS-Daten, die eine Abnahme der gegenwärtigen Verschlußgeschwindigkeit angeben, oder HALT-Daten, die ein Halten der gegenwärtigen Verschlußgeschwindigkeit angeben, gemäß den jeweiligen Ausgangssignalen der ersten und der zweiten Vergleicher (21, 22) zu dem Addierer/Subtrahierer (24),
Steigern der gegenwärtigen Verschlußgeschwindigkeit, Vermindern derselben oder Halten derselben durch den Addierer/Subtrahierer (24),
Erzeugen eines Rücksetzimpulses durch den Rücksetzimpulsgenerator (27) und Liefern des Rücksetzimpulses zu dem Wähler (25), wenn der Taktsignalgenerator mit einer Strom- bzw. Spannungsversorgung verbunden ist oder wenn der Betriebsmodus verändert wird, um den Wähler (25) die Anfangsverschlußgeschwindigkeitsdaten, die durch den Anfangsdatengenerator (26) erzeugt sind, wählen und die Anfangsverschlußgeschwindigkeitsdaten in der Verriegelungsschaltung (28) verriegeln zu lassen,
Erzeugen eines Verschlußsteuerimpulses entsprechend den Verschlußgeschwindigkeitsdaten durch den Verschlußsteuerimpulsgenerator (29), und
Liefern des Verschlußsteuerimpulses zu der Festkörper-Abbildungsvorrichtung.

3. Taktsignalgenerator nach Anspruch 1, bei dem die Anfangsverschlußgeschwindigkeit, die durch den Anfangsdatengenerator (26) einzustellen ist, wahlweise ist.

4. Taktsignalgenerator nach Anspruch 1, bei dem die Anfangsverschlußgeschwindigkeit dem Mittelpunkt zwischen der höchsten Verschlußgeschwindigkeit und der niedrigsten Verschlußgeschwindigkeit entspricht.

5. Verfahren zum Steuern der Belichtungszeit einer Festkörper-Abbildungsvorrichtung nach Anspruch 2, bei dem eine wahlweise Anfangsverschlußgeschwindigkeit, die die Anfangsverschlußgeschwindigkeitsdaten festlegt, dem Anfangsdatengenerator (26) vermittelt ist.

6. Verfahren zum Steuern der Belichtungszeit einer Festkörper-Abbildungsvorrichtung nach Anspruch 5, bei dem die wahlweise Verschlußgeschwindigkeit der Mittelpunkt zwischen der höchsten Verschlußgeschwindigkeit und der niedrigsten Verschlußgeschwindigkeit ist.

7. Videokamera, umfassend:
eine Festkörper-Abbildungsvorrichtung (10) mit:
einer Vielzahl von Sensorelementen (11) zum Speichern einer Signalladung proportional zu der Menge an einfallendem Licht,
einem Ausgangsverstärker (16) zum Liefern eines Ausgangssignales entsprechend der Menge an einfallendem Licht von dem Objekt und
dem Taktsignalgenerator nach Anspruch 1.

## Revendications

1. Générateur de signal de cadencement destiné à générer une impulsion de commande de vitesse d'obturateur destinée à commander le temps d'exposition d'un dispositif monolithique de formation d'image, ledit générateur de signal de cadencement comprenant :
- un premier comparateur (21) auquel une tension de référence supérieure et une tension de détection représentant le niveau du signal de sortie du dispositif monolithique de formation d'image sont appliquées,
- un second comparateur (22) auquel une tension de référence inférieure et ladite tension de détection sont appliquées,
- un décodeur (23) qui reçoit les signaux de sortie respectifs dudit premier et dudit second comparateurs (21, 22) et applique des données UP spécifiant l'augmentation de la vitesse de l'obturateur, des données DOWN spécifiant la diminution de la vitesse de l'obturateur ou des données HOLD spécifiant le maintien de la vitesse de l'obturateur, suivant les signaux de sortie respectifs dudit premier et dudit second comparateurs (21, 22),
- un additionneur/soustracteur (24) qui exécute une opération conformément aux données qui lui sont appliquées par ledit décodeur (23) afin d'augmenter les données de vitesse d'obturateur, de diminuer celles-ci, ou de maintenir celles-ci,
- un générateur d'impulsion de réinitialisation (27) destiné à générer une impulsion de réinitialisation lorsque le générateur de signal de cadencement est connecté à une alimentation, ou lorsque le mode opératoire est modifié,
- un générateur de données initiales (26) qui génère des données initiales de vitesse d'obturateur représentant une vitesse d'obturateur initiale, et
- un générateur d'impulsion de commande d'obturateur (29) qui génère une impulsion de commande d'obturateur correspondant aux données de vitesse d'obturateur, dans lequel:
- ledit premier et ledit second comparateurs (21, 22), ledit décodeur (23) et ledit additionneur/soustracteur (24) constituent un moyen d'établissement de vitesse d'obturateur destiné à établir des données de vitesse d'obturateur sur la base de la tension de détection représentant le niveau du signal de sortie du dispositif monolithique de formation d'image, et
- le générateur de données initiales (26) et ledit générateur d'impulsion de réinitialisation (27) constituent un moyen d'établissement de données initiales destiné à établir des données initiales prédéterminées en tant que données de vitesse d'obturateur lorsque le générateur de signal de cadencement est connecté à l'alimentation ou lorsque le mode opératoire est modifié,
caractérisé en ce que :
- un sélecteur (25) inclus dans ledit moyen d'établissement de vitesse d'obturateur et ledit moyen d'établissement de données initiales, et relié à un circuit à verrouillage (28) sélectionne les données de vitesse d'obturateur déterminées par l'additionneur/soustracteur (24) pendant le fonctionnement normal du dispositif monolithique de formation d'image ou les données initiales de vitesse d'obturateur générées par ledit générateur de données initiales (26) lorsqu'une impulsion de réinitialisation générée par le générateur d'impulsion de réinitialisation (27) lui est appliquée,
- ledit générateur d'impulsion de réinitialisation (27) applique l'impulsion de réinitialisation audit sélecteur (25) à chaque fois que le générateur de signal de cadencement est connecté à ladite alimentation ou à chaque fois que le mode opératoire est modifié,
- ledit générateur de données initiales (26) applique les données initiales de vitesse d'obturateur audit sélecteur (25), et
- la sortie dudit circuit à verrouillage (28) est reliée audit générateur de commande d'obturateur (26) et audit additionneur/soustracteur (24).

2. Procédé de commande du temps d'exposition d'un dispositif monolithique de formation d'image utilisant le générateur de signal de cadencement selon la revendication 1, ledit procédé comprenant les étapes consistant à :
intégrer le signal de sortie du dispositif monolithique de formation d'image afin d'obtenir une tension de détection représentant le niveau du signal de sortie du dispositif monolithique de formation d'image,
appliquer la tension de détection et la tension de référence supérieure au premier comparateur (21) et appliquer la tension de détection et la tension de référence inférieure au second comparateur (22),
décoder les signaux de sortie respectifs du premier et du second comparateurs (21, 22) au moyen du décodeur (23),
appliquer des données UP spécifiant l'augmentation de la vitesse de l'obturateur en cours, des données DOWN spécifiant la diminution de la vitesse de l'obturateur en cours ou des données HOLD spécifiant le maintien de la vitesse de l'obturateur en cours, conformément aux signaux de sortie respectifs du premier et du second comparateurs (21, 22), à l'additionneur/soustracteur (24),
augmenter la vitesse de l'obturateur en cours, diminuer celle-ci ou maintenir celle-ci au moyen de l'additionneur/soustracteur (24),
générer une impulsion de réinitialisation grâce au générateur d'impulsion de réinitialisation (27) et appliquer l'impulsion de réinitialisation au sélecteur (25) lorsque le générateur de signal de cadencement est connecté à une alimentation ou lorsque le mode opératoire est modifié pour faire en sorte que le sélecteur (25) sélectionne les données initiales de vitesse d'obturateur générées par le générateur de données initiales (26) et mémorise lesdites données initiales de vitesse d'obturateur dans le circuit à verrouillage (28),
générer une impulsion de commande d'obturateur correspondant aux données de vitesse d'obturateur grâce au générateur d'impulsion de commande d'obturateur (29), et
appliquer l'impulsion de commande d'obturateur au dispositif monolithique de formation d'image.

3. Générateur de signal de cadencement selon la revendication 1, dans lequel la vitesse initiale de l'obturateur devant être établie dans le générateur de données initiales (26) est optionnelle.

4. Générateur de signal de cadencement selon la revendication 1, dans lequel la vitesse initiale de l'obturateur correspond au point intermédiaire entre la vitesse de l'obturateur la plus élevée et la vitesse de l'obturateur la plus faible.

5. Procédé de commande du temps d'exposition d'un dispositif monolithique de formation d'image, selon la revendication 2, dans lequel une vitesse initiale optionnelle de l'obturateur spécifiant les données initiales de vitesse d'obturateur est appliquée au générateur de données initiales (26).

6. Procédé de commande du temps d'exposition d'un dispositif monolithique de formation d'image selon la revendication 5, dans lequel la vitesse optionnelle de l'obturateur est le point intermédiaire entre la vitesse de l'obturateur la plus élevée et la vitesse de l'obturateur la plus faible.

7. Caméra vidéo comprenant :
un dispositif monolithique de formation d'image (10) comprenant :
une pluralité d'éléments de détection (11) destinés à stocker une charge de signal proportionnelle à la quantité de la lumière incidente,
un amplificateur de sortie (16) destiné à fournir un signal de sortie correspondant à la quantité de lumière incidente provenant du sujet, et
le générateur de signal de cadencement selon la revendication 1.
